# EUROPEAN PATENT SPECIFICATION

(11) **EP 1 291 072 B1**
(45) Date of publication and mention of the grant of the patent: **02.06.2010**
(21) Application number: 01935930.6
(22) Date of filing: 23.04.2001
(51) Int. Cl.: B01J 8/02

(54) **A GAS-SOLID PHASE EXOTHERMIC CATALYTIC REACTOR WITH LOW TEMPERATURE DIFFERENCE AND ITS PROCESS**
EXOTHERMER KATALYTISCHER GAS-FESTPHASENREAKTOR MIT GERINGER TEMPERATURDIFFERENZ UND ZUGEHÖRIGES VERFAHREN
PROCEDE DE CATALYSE EN PHASE SOLIDE-GAZEUSE THERMIQUE DANS DES CONDITIONS D'ECART DE BASSES TEMPERATURES ET RECIPIENT DE REACTION CONNEXE

(30) Priority: 24.04.2000 CN 00105264
(43) Date of publication of application: 12.03.2003
(73) Proprietor: Lou, Ren, Zhengjiang, Hangzhou 310013 (CN)
(72) Inventor: LOU, Ren, Zhengjiang, Hangzhou 310013 (CN); LOU, Shoulin, Zhengjiang, Hangzhou 310013 (CN)
(74) Representative: Altenburg, Udo
(86) International application number: PCT/CN2001/000611
(87) International publication number: WO 2001/091894

(56) References cited:
- WO-A-98/07510
- CN-A- 1 129 205
- CN-A- 1 174 096
- CN-A- 1 220 253
- CN-C- 1 034 070
- CN-U- 2 063 942
- CN-Y- 2 290 400
- GB-A- 279 819
- US-B1- 6 214 296

## Description

### Field of invention

The present invention, in the chemical engineering field, relates to a device for gas-solid phase catalytic reaction useful for fluid catalytic reaction and heat transfer process, especially suitable for use in synthetic processes of methanol, hydrocarbons and the like, as well as in synthetic processes of methylamine, ammonia, methane, and dimethyl ether, etc.,

A gas-solid phase exothermic catalytic reactor according to the precharacterizing portion of claim 1 is f.e. known from CN-U-2063942.

### Background of invention

In the gas-solid phase exothermic catalytic reactions for the syntheses of methanol, methylamine, dimethyl ether, ammonia, and hydrocarbons under pressure, with the proceeding of the reaction, the continuously liberated reaction heat causes temperature elevation in the catalyst layer. In order to improve the reactor efficiency, it is necessary to remove the reaction heat to decrease the temperature of reaction gases. A method, which has been widely used in industrial reactors, is of multi-stage quenching with feed gases for lowering the temperature of the reaction gases. In this case, while the temperature of the reaction gases is lowered by feed gases, the concentration of the products is also lowered, thus being detrimental to the synthetic efficiency.

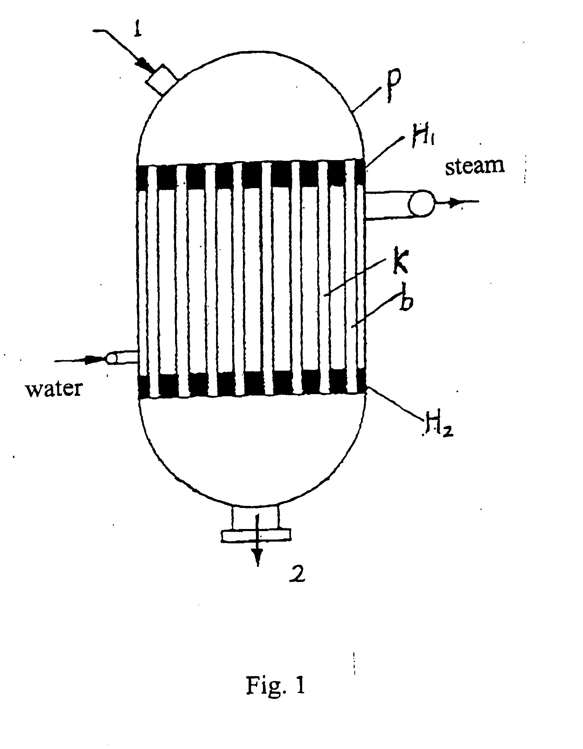

An alternative reactor is a shell-and-tube reactor used by Lurgi Company, Germany, for methanol synthesis (Figure 1). In a pressured shell (P), there are a number of round tubes (b) located between the upper and lower tube plates H₁ and H₂, while catalyst (K) is packed in the tubes. Feed gases enter from an upper gas-inlet (1), distributing into the individual tubes and synthesizing the methanol in the catalyst layer inside the round tubes. Water enters laterally into the interspace between the round tubes. The reaction heat is continuously removed by boiling water outside the tubes, and the vapor resulted therefrom exits through a side tube. The reacted gas leaves the tower through a gas outlet tube at the bottom.

This tower has little temperature difference. However, it has the disadvantages of small catalyst load coefficient and need high investment. Furthermore, the synthesis of methylamine, etc., in an adiabatic reactor adapts a zeolite catalyst which has a short lifetime, but can be substantially prolonged under a continuous heat removal or stage cooling being employed to reduce the temperature difference in the catalyst layer.

It is the object of the present invention, based on the features of gas-solid phase catalytic exothermic reversible reactions, to overcome the drawbacks of the prior art, to provide a reactor having the advantages of little temperature difference in the catalyst layer, high catalyst activity, simple and reliable structure, and good operation properties.

### Summary of the invention

This objective is achieved according to the invention by a reactor as defined in claim 1.

The present invention provides a gas-solid phase exothermic catalytic reactor with little temperature difference. Said reactor is principally comprised of a shell (P), a partition (H), cold-tube internals (Cb), a holder (S) and a porous plate (R). The shell (P) is a pressurized container with a gas-inlet (1) at its dome and a gas-outlet (2) at its bottom end plate. The reactor is divided into an upper gas chamber and a lower reaction chamber by the partition (H). The lower reaction chamber is filled with catalyst layer (K). The holder (S) at the bottom of the reactor supports the cold-tube internals (Cb), and the end porous plate (R) holds the catalyst layer (K) outside the cold-tube internals. The features of the reactor are that the shell (P) is divided into a dome (P1) with upper flanges and a housing (P2) with lower flanges, which are hermetically connected with the partition (H), or the partition (H) is sealed with the support ring of the shell. Each of the cold-tube internals (Cb) comprises a gas-feed-in tube (a), a ring tube (c) and a cold-tube (b). The cold-tube (b) is a U shaped tube. The ring tube (c) is connected with the gas-feed-in tube (a) at one side and one end of the cold-tube (b) in U shape at another side, this half of the U shaped cold-tube, which connects with the ring tube (c), forms a descending cold-tube (b_{A}), while another half, the upper end thereof is opening, of the U shape cold-tube forms an ascending cold-tube (b_{B}). The gas-feed-in tube (a) passes through the partition (H) and is sealed with removable stuffing box. The feed gases for synthesis enter the upper gas chamber from the gas-inlet (1) on the top of the shell (P), arriving in the ring tube (c) through the gas-feed-in tube (a) and distributed in each cold-tube (b). In the descending cold-tube, the feed gases firstly flows downward while heat exchanging with the reaction gas outside the cold-tube (b), then flowing upward through the ascending cold-tube while heat exchanging with the reaction gas outside the tube leaving the ascending cold-tube at the top thereof. The feed gases moving out of the tube enter the catalyst layer, subjecting to reaction downward while conducting heat exchange with the feed gases in the cold-tube. The reacted gas moves to the bottom, passing through the porous plate (R) and leaving the reactor through the gas-outlet (2) at the bottom.

In a preferred embodiment of the present invention, the U shaped cold-tube (b) in the cold-tube internals (Cb) of the reactor comprises co-axial multi-row cold-tubes with various ring diameters. In each row, the upper openings on the right half of all the U shaped cold tubes are connected with the ring tube (c), forming the descending cold-tube, or the upper openings on the left half of all the U shaped cold-tubes are connected with the ring tube (c), forming the descending cold-tube.

In another preferred embodiment of the present invention, the U shaped cold-tube (b) in the cold-tube internals (Cb) of the reactor comprises co-axial multi-row cold-tubes with various ring diameters. In each row, every two U shaped tubes form a group. The two U shaped tubes have a large bend and a small bend, respectively. The U shaped tube having a small bend is surrounded by that having a large bend. The top end of the U shaped tube having a large bend is connected on its left half with the ring tube (c) while the top end of the U shaped tube having a small bend is connected on its right half with the ring tube (c). Alternatively, the right half of the U shaped tube having a large bend, as the descending tube, connects with the ring tube (c), while the left half of the U shaped tube having a small bend, as the descending tube, connects with the ring tube (c). These configurations result in the gases flowing in the adjacent tubes in different directions.

In another embodiment of the present invention, the reactor further comprises a cylinder-shaped gas-distributing cylinder (E) and a gas-collecting cylinder (F). There are gas holes both on the gas-distributing cylinder (E) and gas-collecting cylinder (F). The gases enter the catalyst layer through the gas holes on the gas-distributing cylinder (E), flowing radially in the catalyst layer and through the gas holes into the gas-collecting cylinder (F), thus being collected in the gas-collecting cylinder (F). The reacted gas in the gas-collecting cylinder (F) then leaves the reactor through the gas-outlet (2) at the bottom.

### Brief description of the drawings

The present invention is further described by referring to the following drawings.
Figure 1 shows a reactor of the prior art;
Figure 2 is a reactor of a preferred embodiment of the present invention, which shows schematically a synthesis tower wherein the cold-tube (b) is a U shaped tube;
Figure 3 shows the connection of the cold-tube with the ring tube (c).
Figure 4 shows a reactor of another preferred embodiment of the present invention, in which the gases are flowing radially in the catalyst layer.
Figure 5 shows schematically a synthesis tower having an upper ring tube (c) and a lower ring tube (d) and an ascending cold tube (bA) and a descending cold-tube (bB) in a cold-tube internal being not an embodiment of the present invention as claimed.
Figure 6 shows schematically a high-pressured shell wherein the inner parts of the synthesis tower are installed.

### Detailed description of the preferred embodiments of the invention

The present invention provides a gas-solid phase exothermic catalytic reactor with little temperature difference. Said reactor is principally comprised of a shell (P), a partition (H), cold-tube internals (Cb), a holder (S) and a porous plate (R). The shell (P) is a pressured container with a gas-inlet (1) at its dome and a gas outlet (2) at its bottom end plate. The reactor is divided into an upper gas chamber and a lower reaction chamber by the partition (H). The lower reaction chamber is filled with catalyst layer (K). The holder (S) at the bottom of the reactor supports the cold-tube internals (Cb). The porous plate (R) at the end of the reactor holds the catalyst layer (K) outside the cold-tube internals. The principal features of the reactor are that the shell (P) is divided into a dome (P1) with upper flanges and a housing (P2) with lower flanges, which are hermetically connected with the partition (H), or the partition (H) is sealed with the support ring of the shell. Each of the cold-tube internals (Cb) comprises a gas-feed-in tube (a), a ring tube (c), and a cold-tube (b). The cold-tube (b) is a U shaped tube.
The ring tube (c) is connected with the gas-feed-in tube (a) at one side and one end of the U shaped cold-tube (b) at another side. Half of the U shaped cold-tube, which connects with the ring tube (c), forms a descending cold-tube (b_{A}). The other half, the upper end thereof being open, of the U shaped cold-tube forms an ascending cold-tube (b_{B}).
The gas-feed-in tube (a) passes through the partition (H) and is sealed with a removable stuffing box. The feed gases for synthesis enter the upper gas chamber from the gas-inlet (1) on the top of the shell (P), arriving in the ring tube (c) through the gas-feed-in tube (a) and then distributing in each cold-tube (b). In the descending cold-tube, the feed gases firstly flows downward while heat exchanging with the reaction gas outside of the cold-tube (b), then flowing upward through the ascending cold-tube while heat exchanging with the reaction outside the tube, and leaving the ascending cold-tube at the top. The feed gases flow out the tube, entering the catalyst layer and subjects to reaction downward while conducting heat exchange with the feed gases in the cold-tube. The reacted gas flows to the bottom, passing through the porous plate (R) and leaving the reactor through the gas-outlet (2) at the bottom. According to the present invention, the out-of-reactor gas can further enter subsequent reactors in series, such as shell-and-tube reactor, for further synthetic reaction.

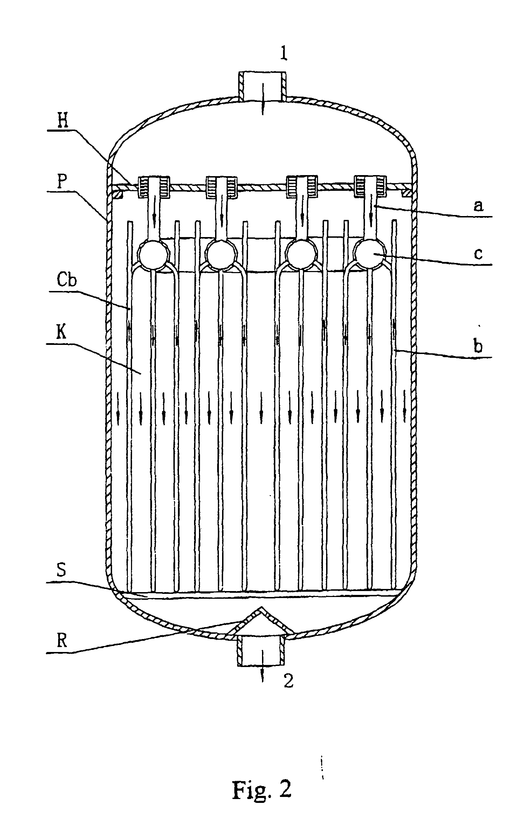

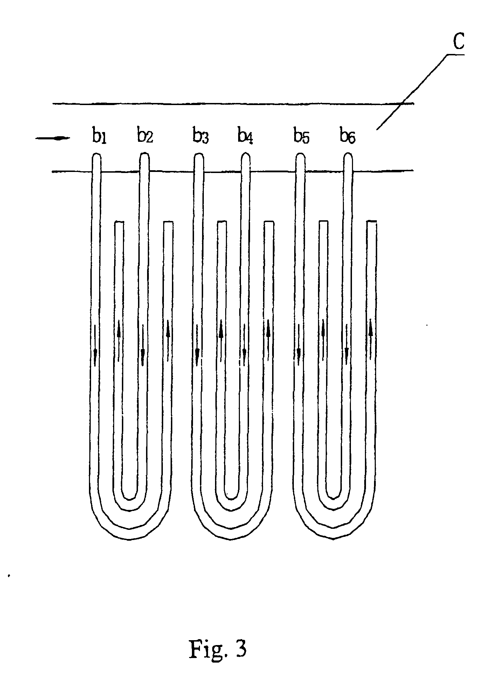

Figure 2 shows schematically a synthesis tower, wherein the cold-tube (b) is a U shaped tube. Figure 3 shows the connection of the cold-tube with the ring tube (c). The shell (P) in Figure 2 is a shell, which subjects to inner pressure of about 4-15 MPa. The shell (P) is a cylinder container with a dome and a lower end plate. There is a feed-gas-inlet (1) at the dome and a reaction-gas-outlet (2) at the lower end plate. The container has a round partition (H), which is hold onto the cylinder wall and sealed by welding or in a removable manner, dividing the container into an upper part and a lower part. The feed gases enter the tower from the gas-inlet (1), distributing into the gas-feed-in tube (a) of each cold-tube internal through the upper gas chamber, then entering the individual U shaped cold-tube b1 and b2 of each cold-tube internals. The feed gases flow downward, in the descending cold-tube section of the U shaped cold tube, to the U shaped bend at the bottom thereof and change its direction, entering the ascending cold-tube section of same, then flowing upward to leave the cold-tube.
The gases are heated in the cold-tube by the reaction gas outside of the tube. The heated gases enter the catalyst layer outside tube, flowing downward subjecting to reaction while heat exchanging with the inside-tube feed gases until reaching the bottom, then passing through the porous plate (R) and leaving the tower from the gas-outlet (2). Removal of heat from the reaction gas in the catalyst layer by the feed gases in the U shaped cold-tube results in little temperature difference in the catalyst layer. Figure 3 shows the connection of the cold-tube with the ring tube (c), showing that in each of the cold-tube internals (Cb), two U shaped tubes form a group. The two U shaped tubes have a large bend and a small bend, respectively. The U shaped tube having a small bend is surrounded by one having a large bend. The left half of the U shaped tube having a large bend is the descending cold-tube, connected with the ring tube (c) while the right half of the U shaped tube having a small bend is the descending cold-tube, connected with the ring tube (c). The tube radius of the cold-tube can be about 16-38 mm.

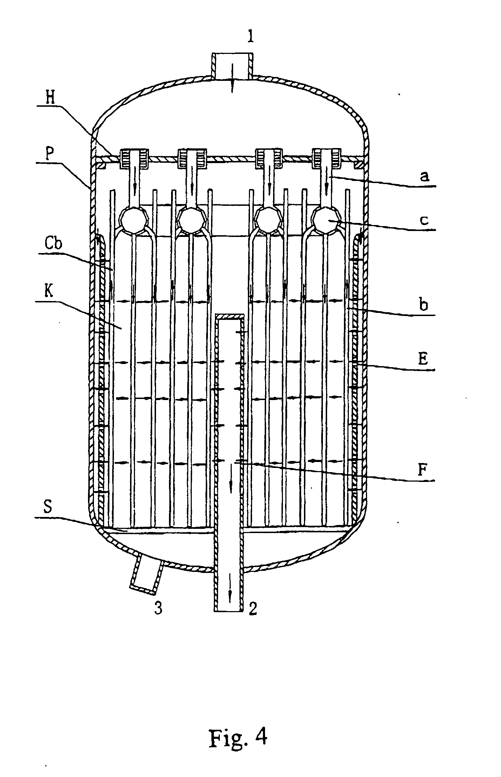

Figure 4 shows an alternative structure of the present invention, which differs from Figure 3 in that a gas-distributing cylinder (E) is set up at the periphery of the catalyst layer, and a gas-collecting cylinder (F) is set up at the central axial position of the catalyst layer.
Both E and F are porous cylinders. After flowing axially in the upper portion of the catalyst layer to react with the gases, the gases enter the space between the gas-distributing-cylinder (E) and the shell (P), then entering the catalyst layer through the holes on the gas-distributing cylinder (E). In the catalyst layer, the gas flows inward and subjects to reaction while heat exchanging counter-current with the gases in the cold-tube, then entering the central gas-collecting cylinder (F) through the holes on the gas-collecting cylinder (F) and finally leaving the tower through the gas-outlet (2) at the bottom. In Figure 4, numeral 3 at the bottom denotes a discharge nozzle for the catalyst. Figure 4 is suitable for the reactor having a higher catalyst layer, which can effectively reduce the pressure difference between the gases entering and leaving the synthesis reactor.

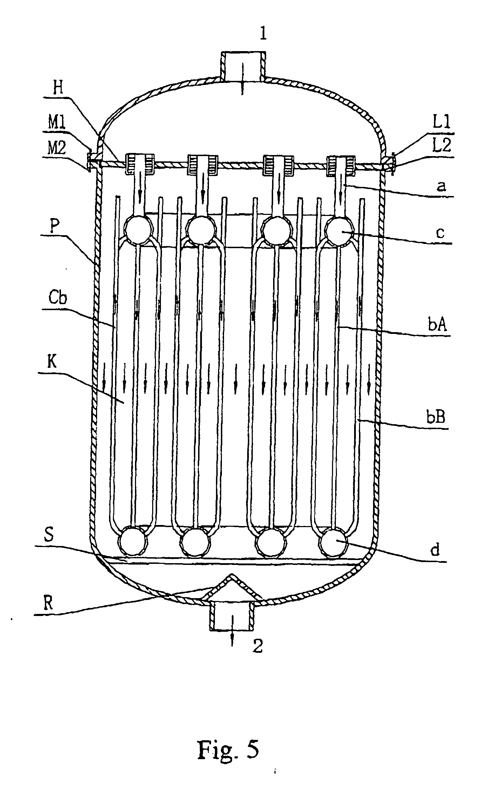

Figure 5 showing not an embodiment of the invention as claimed shows schematically a synthesis tower having an upper ring tube (c) and a lower ring tube (d) and an ascending cold tube (b_{A}) and a descending cold-tube (b_{B}) in a cold-tube internal. The shell (P) is a shell which subjects to inner pressure of about 2-15 MPa and comprised of a dome (P1) with upper flanges and a housing (P2) with lower flanges. The dome (P1) and the housing (P2) together with the upper and lower sides of the partition (H) are sealed by gaskets L1 and L2 under the upper and lower flanges, and hermetically fixed by bolt (m1) and screw cap (m2). Numerous stuffing boxes are set up on the partition (H), acting as seals between the partition and the gas-feed-in tubes (a) of the cold tube internals. Each of the cold-tube internal has an upper ring tube (c) and a lower ring tube (d). The upper ring tube (c) is connected with the gas-feed-in tube (a) on one side and the descending cold-tube (b_{A}) on the other side, and the lower ring tube (d) is connected with the descending cold-tube (b_{A}) and the ascending cold-tube (b_{B}).

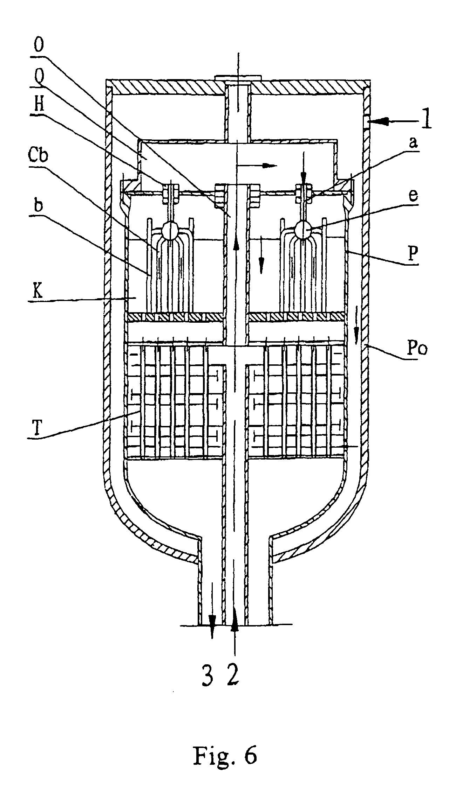

Figure 6 shows schematically a synthesis tower having high-pressured shell, wherein the inner parts of the synthesis tower are installed, which can be used for ammonia synthesis with a pressure in the range of about 10-32 MPa. In the Figure, P₀ is an outer shell of a synthesis tower, which is subjected to a high pressure, the shell with inner parts (P) includes a cove plate (Q) on the upper gas-collecting chamber, the heat exchanger (T) located in the lower part of the inner parts. As in Figure 2, the inner parts include cold-tube internals (Cb) and a partition (H), with the cold-tube in each of the cold tube internal being in U shape. According to Figure 3, the main-line gas (1) of the feed gas is introduced from the gas-inlet at the upper part of the outer shell, flowing downward along the space between the outer and inner shells to the heat exchanger (T), then heated by the reaction gas in the tubes of same. After leaving out of the heat exchanger and mixing with the side-line cold gas (2) from the bottom, the gases enter the central tube (O), flowing into the upper gas-collecting chamber located between the cover plate (Q) and the partition (H), then entering the cold-tube internals through the gas-leading-tube (a) of the cold-tube and heated by the reaction gas outside the tube. Finally, they leave the cold-tube, enter the catalyst layer and subject to reaction. The reaction gas leaving from the catalyst layer enters the heat exchanger in the lower part and is cooled by the feed gases entering the tower, then leaving the tower (3) through the bottom.

In the present invention, the catalyst is packed between the cold-tubes, thereby enhancing the catalyst loading coefficient up to 75%. In contrast, in the Lurgi shell-and-tube methanol reactor (Germany), since the catalyst is loaded in the tubes, the loading coefficient is only 30%, thus increasing the pressure difference of the reactor due to the decreasing of the cross section for flowing gases. In the Lurgi tower, the upper and lower tube plates are connected by fixed welding with thousands of tubes, which tend to leak. However, in the present invention, where U shaped tubes are used as the cololing-tubes, the ascending cold-tubes and the descending cold-tubes are bent into U shaped bents without using any lower ring tube connections, thus avoiding potential gas leaks from occurring in the joints between the loops and the cold-tubes, thereby enhancing structural reliability.

The present invention is further described by the following examples.

### Example 1

Methanol synthesis under low pressure was performed by using the U shaped tube synthesis tower as shown in Figure 2. The tower has an inner diameter of about 2 m, a height of about 8.5 m, a cold-tube area of about 300 m². The synthesis was conducted under the following conditions: loading copper-based methanol NC306 or C302, the loading amount of the catalyst being about 20 m³, the synthesis pressure being about 5.0 MPa, the feed gas components: H₂ 76.4%, CO 10.53%, CO₂ 3.16%, H₂O 0.02%, N₂ 4.99%, CH₄ 4.35%, and CH₃OH 0.50%, the flowing rate of the feed gas being about 150,000 NM³/h, the temperature of the hot point in the catalyst layer being about 250°C, temperature difference being less than 10°C to give a methanol productivity of about 330 tons/day. As a comparison, in the case of using Lurgi shell-and-tube tower (Germany) for the production of methanol in the same amount, it is necessary to use a synthesis tower having an inner diameter of 3 m and a height of 10 m. The investment cost will double or more.

## Claims

1. A gas-solid phase exothermic catalytic reactor consisting essentially of a shell (P), a partition (H), cold-tube internals (Cb), a holder (S) and a porous plate (R);
the shell (P) is a pressured container with gas-inlet (1) at its dome and gas-outlet (2) at its bottom end plate;
the pressured container is divided into an upper gas chamber and a lower reaction chamber by the partition (H), the lower reaction chamber is filled with catalyst layer (K);
each of the cold-tube internals (Cb) comprises a gas-feed-in-tube (a), a ring tube (c), and a cold-tube (b);
the gas-feed-in-tube (a) passes through the partition (H) and is sealed with a removable stuffing box;
the holder (S) at the bottom of the lower reaction chamber supports the cold-tube internals (Cb), and the end porous plate (R) holds the catalyst layer (K) outside the cold-tube internals;
the shell (P) is divided into a dome (P1) with upper flanges and a housing (P2) with lower flanges, which are hermetically connected with the partition (H), or the partition (H) is sealed with the support ring of the shell;
**characterized in that**
the cold-tube (b) is a U-shaped tube;
the ring tube (c) is connected with the gas-feed-in-tube (a) at one side, and one end of the U-shaped cold-tube (b) at the other side, half of the U-shaped cold-tube, which connects with the ring tube (c) forms a descending cold-tube (bₐ), while the other half, the upper end thereof being open, of the U-shaped cold-tube forms an ascending cold-tube (b_{B});
the feed gases enter the upper gas chamber from the gas inlet (1) on the top of the shell (P), arriving in the ring tube (c) through the gas-feed-in tube (a) and distributing into each cold-tube (b); in the descending cold-tube the feed gases firstly flow downward while heat exchanging with the reaction gas outside the cold-tube (b), then flow upward through the ascending cold-tube while heat exchanging with the reaction gas outside of the tube and then leaving the ascending cold-tube at the top; the feed gases move out of the tube, entering the catalyst layer and subjecting to reaction downward while conducting heat exchange with the feed gases in the cold-tube; the reacted gas flow to the bottom, passing through the porous plate (R) and leaving the reactor through the gas outlet (2) at the bottom.

2. The reactor according to claim 1, **characterized in that**, in the cold-tube internals (Cb) of the reactor, the U-shaped cold-tube (b) comprises coaxial multi-row cold-tubes with various ring diameters; in each row, the upper openings on the right half of all the U-shaped cold-tubes are connected with the ring tube (c), forming the descending cold-tube, or the upper opening on the left half of all the U-shaped cold-tubes are connected with the ring tube (c), forming the descending cold-tube.

3. The reactor according to claim 1, **characterized in that**, in the cold-tube internals (Cb) of the reactor, the U-shaped cold-tube (b) comprises coaxial multi-row cold-tubes with various ring diameters; in each row, every two U-shaped tubes form a group; the two U-shaped tubes have a large bend and a small bend, respectively; the U-shaped tube having a small bend is surrounded by that having a large bend; the top end on the left half of the U-shaped tube having a large bend is connected with the ring tube (c), and the top end on the right half of the U-shaped tube having a small bend is connected with the ring tube (c) alternatively, the right half of the U-shaped tube having a large bend, as the descending tube, connects with the ring tube (c), while the left half of the U-tube having a small bend, as the descending tube, connects with the ring tube (c); these configurations result in the gases in the adjacent tubes flowing up or down it in different directions.

4. The reactor according to any one of claims 1 to 3, **characterized in that** the lower reaction chamber comprises a cylinder-shaped gas-distributing cylinder (E) and a gas-collecting cylinder (F); there are gas holes both on the gas-distributing cylinder (E) and gas-collecting cylinder (F), the gases enter the catalyst layer through the gas holes on the gas-distributing cylinder (E), flowing radially in the catalyst layer to the gas holes of the gas-collecting cylinder (F), and being collected in the gas-collecting cylinder (F), then leaving the reactor through the gas-outlet tube (2) at the bottom.

## Patentansprüche

1. Exothermer katalytischer Gasfestphasenreaktor, umfassend im wesentlichen eine Hülle (P), einen Abschnitt (H), Kaltröhreneinbauten (Cb), einen Halter (S) und eine poröse Platte (R);
die Schale (P) ist ein unter Druck gesetzter Behälter mit einem Gaseinlass (1) an seiner Kuppel, und einem Gasauslass (2) an seiner unteren Endplatte;
der unter Druck gesetzte Behälter ist in eine obere Gaskammer und eine untere Reaktionskammer durch den Abschnitt (H) aufgeteilt, wobei die untere Reaktionskammer mit einer Katalysatorschicht (K) gefüllt ist;
jeder der Kaltrohreinbauten (Cb) umfasst eine Gaszuführröhre (a), eine Ringröhre (c) und eine Kaltröhre (b);
die Gaszuführröhre (a) verläuft durch den Abschnitt (H) und ist durch eine entfernbare Stopfbuchse abgedichtet;
der Halter (S) am Boden der unteren Reaktionskammer trägt die Kaltröhreneinbauten (Cb), und die poröse Endplatte (R) hält die Katalysatorschicht (K) außerhalb der Kaltröhreneinbauten;
die Hülle (P) ist in eine Kuppel (P1) mit oberen Flanschen und in ein Gehäuse (P2) mit unteren Flanschen aufgeteilt, welche hermetisch mit dem Abschnitt (H) verbunden sind, oder der Abschnitt (H) ist durch den Unterstützungsring der Hülle abgedichtet;
**dadurch gekennzeichnet, dass**
die Kaltröhre (b) eine U-förmige Röhre ist;
die Ringröhre (c) mit der Gaszufuhrröhre (a) an einer Seite und ein Ende der U-förmigen Kaltröhre (b) an der anderen Seite verbunden ist, die Hälfte der U-förmigen Kaltröhre, welche mit der Ringröhre (c) verbunden ist, bildet eine absteigende Kaltröhre (bₐ), während die andere Hälfte der U-förmigen Kaltröhre, deren oberes Ende offen ist, eine ansteigende Kaltröhre (b_{B}) bildet;
die Zuführgase in die obere Gaskammer aus dem Gaseinlass (1) auf der Oberseite der Hülle (P) eindringen, in der Ringröhre (c) durch das Gaszuführrohr (a) ankommen, und sich in jede Kaltröhre (b) verteilen; in die absteigende Kaltröhre, wo die Zuführgase zuerst abwärts fließen, während ein Wärmeaustausch mit dem Reaktionsgas außerhalb der Kaltröhre (b) stattfindet, dann aufwärts durch die aufsteigende Kaltröhre fließen, während ein Wärmeaustausch mit dem Reaktionsgas außerhalb der Röhre stattfindet, und dann die aufsteigende Kaltröhre an der Oberseite verlassen, wobei sich die Zufuhrgase aus der Röhre hinausbewegen, die Katalysatorschicht betreten und einer Abwärtsreaktion unterworfen werden, während ein Wärmeaustausch mit den Zufuhrgasen in der Kaltröhre abläuft, das reagierte Gas zu dem Unterteil fließt, durch die poröse Platte (R) und den Reaktor durch den Gasauslass (2) am Boden verlässt.

2. Reaktor nach Anspruch 1, **dadurch gekennzeichnet, dass** in den Kaltröhreneinbauten (Cb) des Reaktors die U-förmige Kaltröhre (b) koaxiale mehrreihige Kaltröhren mit verschiedenen Ringdurchmessern umfasst, wobei in jeder Reihe die oberen Öffnungen auf der rechten Hälfte all der U-förmigen Kaltröhren mit der Ringröhre (c) verbunden sind, und dabei die absteigende Kaltröhre bilden, oder die oberen Öffnungen der linken Hälfte all der U-förmigen Kaltröhren mit der Ringröhre (c) verbunden sind, und dabei die absteigende Kaltröhre bilden.

3. Reaktor nach Anspruch 1, **dadurch gekennzeichnet, dass** in den Kaltröhreneinbauten (Cb) des Reaktors die U-förmige Kaltröhre (b) koaxiale mehrreihige Kaltröhren mit verschiedenen Ringdurchmessern umfasst; wobei in jeder Reihe immer zwei U-förmige Röhren eine Gruppe bilden, wobei jeweils zwei U-fömnige Röhren eine große Biegung und eine kleine Biegung aufweisen; wobei die U-förmige Röhre mit einer kleinen Biegung von der mit einer großen Biegung umgeben ist, wobei das obere Ende auf der linken Hälfte der U-förmigen Röhre, die eine große Biegung aufweist, ist mit der Ringröhre (c) verbunden; bzw. das obere Ende auf der rechten Hälfte der U-förmigen Röhre, die eine kleine Biegung aufweist, ist mit der Ringröhre (c) verbunden, wobei alternativ die rechte Hälfte der U-förmigen Röhre mit einer großen Biegung als die absteigende Röhre mit der Ringröhre (c) verbunden ist, während die linke Hälfte der U-förmigen Röhre mit einer kleinen Biegung als die absteigende Röhre mit der Ringröhre (c) verbunden ist, wobei diese Gestaltungen dazu führen, dass die Gase in den benachbarten Röhren in verschiedenen Richtungen aufwärts oder abwärts fließen.

4. Reaktor nach irgendeinem der Ansprüche 1 bis 3, **dadurch gekennzeichnet, dass** die untere Reaktionskammer einen zylinderförmigen Gas-verteilenden Zylinder (E) und einen Gas-sammelnden Zylinder (F) umfasst, wobei sowohl der Gas-verteilende Zylinder (E) als auch der Gassammelnde Zylinder (F) Gaslöcher aufweisen, wobei die Gase die Katalysatorschicht durch die Gaslöcher auf dem Gas-verteilenden Zylinder (E) betreten, radial in der Katalysatorschicht zu den Gaslöchern des Gas-sammelnden Zylinders (F) fließen und in dem Gas-sammelnden Zylinder (F) gesammelt werden, und dann den Reaktor durch die Gasauslassröhre (2) am Boden verlassen.

## Revendications

1. Un réacteur catalytique exothermique en phase gaz-solide consistant essentiellement en une enveloppe (P), une cloison (H), des éléments internes à tube froid (Cb), un élément de maintien (S) et une plaque poreuse (R) ;
l'enveloppe (P) est un récipient sous pression avec une entrée de gaz (1) à son dôme et une sortie de gaz (2) à sa plaque d'extrémité de fond ;
le conteneur sous pression est divisé entre une chambre à gaz supérieure et une chambre de réaction inférieure par la cloison (H), la chambre de réaction inférieure est remplie d'une couche de catalyseur (K) ;
chacun des éléments internes à tube froid (Cb) comprend un tube d'alimentation en gaz (a), un tube en anneau (c) et un tube froid (b) ;
le tube d'alimentation en gaz (a) passe au travers de la cloison (H) et est rendu étanche avec un presse-étoupe amovible ;
l'élément de maintien (S) au fond de la chambre de réaction inférieure supporte les éléments internes à tube froid (Cb), et la plaque poreuse d'extrémité (R) maintient la couche de catalyseur (K) à l'écart des éléments internes à tube froid ;
l'enveloppe (P) est divisée en un dôme (P1) avec des flancs supérieurs et un boîtier (P2) avec des flancs inférieurs, qui sont hermétiquement reliés à la cloison (H), ou la cloison (H) est rendue étanche avec l'anneau support de l'enveloppe ;
**caractérisé en ce que**
le tube froid (b) est un tube en forme de U ;
le tube en anneau (c) est relié au tube d'alimentation en gaz (a) d'un côté, et une extrémité du tube froid en forme de U (b) de l'autre côté, la moitié du tube froid en forme de U qui est reliée au tube en anneau (c) forme un tube froid descendant (bₐ) tandis que l'autre moitié, dont l'extrémité supérieure est ouverte, du tube froid en forme de U forme un tube froid ascendant (bₐ) ;
les gaz à alimenter entrent dans la chambre à gaz supérieure depuis l'entrée de gaz (1) au sommet de l'enveloppe (P), arrivant dans le tube en anneau (c) au travers du tube d'alimentation en gaz (a) et se distribuant dans chaque tube froid (b) ; dans le tube froid descendant, les gaz d'alimentation s'écoulent tout d'abord vers le bas tout en échangeant de la chaleur avec le gaz de réaction à l'extérieur du tube froid (b), puis s'écoulent vers le haut au travers du tube froid ascendant tout en échangeant de la chaleur avec le gaz de réaction à l'extérieur du tube puis en quittant le tube froid ascendant au sommet ; les gaz d'alimentation se déplacent hors du tube, entrant dans la couche de catalyseur et subissant une réaction vers le bas tout en opérant un échange thermique avec les gaz d'alimentation dans le tube froid ; le gaz ayant réagi s'écoule vers le bas, passant au travers de la plaque poreuse (R) et quittant le réacteur au travers de la sortie de gaz (2) au fond.

2. Le réacteur selon la revendication 1, **caractérisé en ce que**, dans les éléments internes à tube froid (Cb) du réacteur, le tube froid en forme de U (b) comprend des tubes froids en rangées multiples avec divers diamètres annulaires ; dans chaque rangée, les ouvertures supérieures sur la moitié droite de tous les tubes froids en forme de U sont reliées au tube en anneau (c), formant le tube froid descendant, ou les ouvertures supérieures sur la moitié gauche de tous les tubes froids en forme de U sont reliées au tube en anneau (c), formant le tube froid descendant.

3. Le réacteur selon la revendication 1, **caractérisé en ce que**, dans les éléments internes à tube froid (Cb) du réacteur, le tube froid en forme de U (b) comprend des tubes froids coaxiaux en rangées multiples avec divers diamètres annulaires ; dans chaque rangée, chaque ensemble de deux tubes en forme de U forme un groupe ; les deux tubes en forme de U présentent une grande courbure et une petite courbure, respectivement ; le tube en forme de U ayant une petite courbure est entouré par celui ayant une grande courbure ; l'extrémité supérieure sur la moitié gauche du tube en forme de U ayant une grande courbure est reliée au tube en anneau (c), et l'extrémité supérieure sur la moitié droite du tube en forme de U ayant une petite courbure est reliée au tube en anneau (c), de façon alternative, la moitié droite du tube en forme de U ayant une grande courbure, en tant que tube descendant, est reliée au tube en anneau (c), tandis que la moitié gauche du tube en forme de U ayant une petite courbure, en tant que tube descendant, est reliée au tube en anneau (c) ; ces configurations font en sorte que les gaz dans les tubes adjacents s'écoulent vers le haut ou vers le bas dans des sens différents.

4. Le réacteur selon l'une des revendications 1 à 3, **caractérisé en ce que** la chambre de réaction inférieure comprend un cylindre de distribution de gaz en forme de cylindre (E) et un cylindre collecteur de gaz (F) ; il est prévu des orifices de gaz à la fois sur le cylindre de distribution de gaz (E) et sur le cylindre collecteur de gaz (F), les gaz entrent dans la couche de catalyseur au travers des orifices de gaz sur le cylindre de distribution de gaz (E), s'écoulant radialement dans la couche de catalyseur en direction des orifices de gaz du cylindre collecteur de gaz (F), et étant collectés dans le cylindre collecteur de gaz (F), puis quittant le réacteur au travers du tube de sortie de gaz (2) au fond.
